# FASCICULE DE BREVET EUROPEEN

(11) **EP 2 267 491 B1**
(45) Date de publication et mention de la délivrance du brevet: **14.11.2012**
(21) Numéro de dépôt: 10154327.0
(22) Date de dépôt: 06.06.2001
(51) Int. Cl.: C03C 17/34, G02B 1/11

(54) **Substrat transparent comportant un revêtement antireflet**
Transparentes Substrat mit einer Antireflexschicht
Transparent substrate with anti reflective coating

(30) Priorité: 07.06.2000 FR 0007271
(43) Date de publication de la demande: 29.12.2010
(62) Demande divisionnaire de: 01940693.3
(73) Titulaire: Saint-Gobain Glass France, 92400 Courbevoie (FR)
(72) Inventeur: Anderson, Charles, 92400 Courbevoie (FR); Blieske, Ulf, 41061 Mönchengladbach (DE)
(74) Mandataire: Lucas, Francois

(56) Documents cités:
- EP-A- 0 933 654
- WO-A-97/48992
- DE-A1- 19 636 970
- US-A- 5 532 871
- US-A- 5 661 596
- US-A- 5 728 456

## Description

L'invention concerne un substrat transparent, notamment en verre, et muni sur au moins une de ses faces d'un revêtement antireflet.

Les revêtements antireflets sont usuellement constitués, pour les plus simples, d'une couche mince interférentielle dont l'indice de réfraction est entre celui du substrat et celui de l'air, ou, pour les plus complexes, d'un empilement de couches minces (en général une alternance de couches à base de matériau diélectrique à forts et faibles indices de réfraction).

Dans leurs applications les plus conventionnelles, on les utilise pour diminuer la réflexion lumineuse des substrats, pour en augmenter la transmission lumineuse. Il s'agit par exemple de vitrages destinés à protéger des tableaux, à faire des comptoirs ou des vitrines de magasins. Leur optimisation se fait donc en prenant en compte uniquement les longueurs d'onde dans le domaine du visible.

Cependant, il s'est avéré que l'on pouvait avoir besoin d'augmenter la transmission de substrats transparents, et cela pas uniquement dans le domaine du visible, pour des applications particulières. Il s'agit notamment des cellules solaires (appelées aussi modules ou collecteurs solaires), par exemple des cellules au silicium. Ces cellules ont besoin d'absorber le maximum de l'énergie solaire qu'elles captent, dans le visible, mais aussi au-delà, tout particulièrement dans le proche infrarouge. Le substrat « extérieur » (tourné vers le ciel) des cellules est généralement en verre trempé.

Il est donc apparu avantageux, pour augmenter leur rendement, d'optimiser la transmission de l'énergie solaire à travers ce verre dans les longueurs d'onde qui importent pour les cellules solaires.

Une première solution a consisté à utiliser des verres extra-clairs, à très faible teneur en oxyde(s) de fer. Il s'agit par exemple des verres commercialisés dans la gamme « DIAMANT » par Saint-Gobain Vitrage.

Une autre solution a consisté à munir le verre, côté extérieur, d'un revêtement antireflet constitué d'une mono-couche d'oxyde de silicium poreux, la porosité du matériau permettant d'en abaisser l'indice de réfraction. Cependant, ce revêtement à une couche n'est pas très performant. Il présente en outre une durabilité, notamment vis-à-vis de l'humidité, insuffisante.

Le document EP 0 939 654 A2 divulgue un revêtement anti reflet pour un substrat transparent.

L'invention a alors pour but la mise au point d'un nouveau revêtement antireflets qui soit capable d'augmenter davantage la transmission (de diminuer davantage la réflexion) à travers le substrat transparent qui le porte, et ceci dans une large bande de longueurs d'onde, notamment à la fois dans le visible et dans l'infrarouge.

Subsidiairement, l'invention a pour but la mise au point d'un nouveau revêtement antireflets adapté pour des cellules solaires.

Subsidiairement, l'invention a pour but la mise au point de tels revêtements qui soient en outre aptes à subir des traitements thermiques, ceci notamment dans le cas où le substrat porteur est en verre qui, dans son application finale, doit être recuit ou trempé.

Subsidiairement, l'invention a pour but la mise au point de tels revêtements qui soient suffisamment durables pour une utilisation en extérieur.

L'invention a tout d'abord pour objet un substrat transparent, notamment verrier, comportant sur au moins une de ses faces un revêtement antireflet (A) de couches minces en matériau diélectrique d'indices de réfraction alternativement forts et faibles. Il comporte successivement :
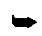 une première couche 1 à haut indice, d'indice de réfraction n₁ compris entre 1,8 et 2,3 et d'épaisseur géométrique e₁ comprise entre 5 et 50 nm,
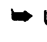 une seconde couche 2 à bas indice, d'indice de réfraction n₂ compris entre 1,30 et 1,70, d'épaisseur géométrique e₂ comprise entre 5 et 50 nm,
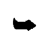 une troisième couche 3 à haut indice, d'indice de réfraction n₃ compris entre 1,80 et 2,30, d'épaisseur géométrique e₃ d'au moins 100 nm ou d'au moins 120 nm,
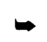 une quatrième couche 4 à bas indice, d'indice de réfraction n₄ compris entre 1,30 et 1,70, d'épaisseur géométrique e₄ d'au moins 80 nm ou d'au moins 90 nm.

Au sens de l'invention, on comprend par "couche" soit une couche unique, soit une superposition de couches où chacune d'elles respecte l'indice de réfraction indiqué et où la somme de leurs épaisseurs géométriques reste également la valeur indiquée pour la couche en question.

Au sens de l'invention, les couches sont en matériau diélectrique, notamment du type oxyde ou nitrure comme cela sera détaillé ultérieurement. On n'exclut cependant pas qu'au moins l'une d'entre elles soit modifiée de façon à être au moins un peu conductrice, par exemple en dopant un oxyde métallique, ceci par exemple pour conférer éventuellement à l'empilement antireflet également une fonction anti-statique.

L'invention s'intéresse préférentiellement aux substrats verriers, mais peut s'appliquer aussi aux substrats transparents à base de polymère, par exemple en polycarbonate.

L'invention porte donc sur un empilement antireflet de type à quatre couches. C'est un bon compromis, car le nombre de couches est suffisamment important pour que leur interaction interférentielle permettre d'atteindre un effet antireflet important. Cependant, ce nombre reste suffisamment raisonnable pour qu'on puisse fabriquer le produit à grande échelle, sur ligne industrielle, sur des substrats de grande taille, par exemple en utilisant une technique de dépôt sous vide du type pulvérisation cathodique (assistée par champ magnétique).

Les critères d'épaisseur et d'indice de réfraction retenus dans l'invention permettent d'obtenir un effet antireflet à large bande, avec une augmentation sensible de la transmission du substrat-porteur, non seulement dans le domaine du visible, mais au-delà aussi, notamment dans l'infrarouge et plus particulièrement dans le proche infrarouge. Il s'agit d'un antireflet performant sur une gamme de longueurs d'onde s'étendant au moins entre 400 et 1100 nm.

Les trois caractéristiques peut-être les plus marquantes de l'invention sont les suivantes :
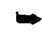 d'une part, par rapport à un empilement antireflet à quatre couches standard (destiné à antirefléter un verre dans le visible), l'épaisseur de la dernière couche, à bas indice, a été augmentée : son épaisseur préférée est supérieure à la valeur de λ/4 utilisée habituellement, (en considérant λ comme le centre du spectre visible)
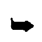 d'autre part, l'épaisseur de l'avant-dernière couche (la troisième), à haut indice est relativement élevée ,
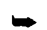 et enfin, il a été découvert que contrairement au choix fait habituellement pour les couches à haut indice, il n'était pas indispensable de choisir des matériaux à indice très élevé comme le TiO₂ ou le Nb₂O₅. Il s'est avéré qu'il était plus judicieux au contraire d'utiliser pour ces couches des matériaux d'indice de réfraction plus modéré, notamment d'au plus 2,3. Cela va ainsi à l'encontre de l'enseignement connu sur les empilements antireflet en général.

Les inventeurs ont ainsi découvert qu'ils pouvaient se permettre d'utiliser les matériaux dont l'indice est autour de 2, comme l'oxyde d'étain SnO₂ ou le nitrure de silicium Si₃N₄ (en comprenant sous cette formulation'des nitrures de silicium pouvant contenir d'autres éléments minoritaires par rapport au silicium, commme un métal du type Al, ou du bore, la stoechiométrie indiquée de l'azote par arpport au silicium n'est donc pas limitative, mais une commodité d'écriture. Il en va de même pour la stoechiométrie en oxygène des oxydes métalliques ou de silicium mentionnée dans le présent texte). Par rapport au TiO₂ notamment, ces matériaux présentent l'avantage d'avoir des vitesses de dépôt bien plus élevées quand on utilise la technique de dépôt dite de pulvérisation cathodique. Dans cette gamme modérée d'indices, on a également un choix plus important de matériaux pouvant être déposés par pulvérisation cathodique, ce qui offre plus de souplesse dans la fabrication industrielle, et plus de possibilités pour ajuster les propriétés de l'empilement.

Les inventeurs ont ainsi sélectionné des épaisseurs pour les couches de l'empilement différentes des épaisseurs choisies habituellement pour les revêtements anti-reflets classiques, destinés à ne diminuer la réflexion que dans le visible. Dans la présente invention, cette sélection a été faite de façon à anti-refléter le substrat non seulement dans le visible mais aussi dans une partie de l'infra-rouge.

Sont données ci-après les gammes préférées des épaisseurs géométriques et des indices des quatre couches de l'empilement selon l'invention :
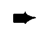 pour la première et/ou la troisième couche, celles à haut indice :
   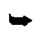 n₁ et/ou n₃ sont avantageusement compris entre 1,85 et 2,15, notamment entre 1,90 et 2,10, ou entre 2,0 et 2,1,
   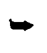 e₁ est avantageusement compris entre 10 et 30 nm, notamment entre 15 et 25 nm,
   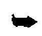 e₃ est avantageusement compris entre 100 ou à 180 nm, notamment entre 130 et 170 nm ou entre140 et 160 nm,
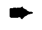 pour la deuxième et/ou la quatrième couche, celles à bas indice :
   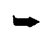 n₂ et/ou n₄ sont avantageusement compris entre 1,35 et 1,55, ou encore entre 1,40 et 1,50,
   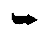 e₂ est avantageusement compris entre 15 et 45 nm, notamment entre 20 et 40 nm, et il est de préférence inférieur ou égal à 35 nm,
   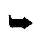 e₄ est avantageusement supérieur ou égal à 90 nm, et est notamment inférieur ou égal à 120 ou 110 nm. e₄ est de préférence choisi entre 95 et 115 nm.

Selon une variante préférée de l'invention, on peut remplacer la première couche 1 à haut indice et la seconde couche 2 à bas indice par une couche unique 5 à indice de réfraction dit "intermédiaire" e₅, notamment compris entre 1,60 et 1,90, de préférence compris entre 1,70 et 1,80.

Cette couche a de préférence une épaisseur géométrique e₅ comprise entre 40 et 120 nm (de préférence 60 à 100 nm ou 65 à 85 nm).

Dans les empilements antireflets conventionnels à trois couches, optimisés pour le domaine visible en vision perpendiculaire, cette épaisseur est plutôt généralement choisie au-dessus de 120 nm.

Cette couche à indice intermédiaire a un effet optique similaire à celui d'une séquence couche à haut indice / couche à bas indice quand il s'agit de la première séquence, des deux couches les plus proches du substrat porteur de l'empilement. Elle présente l'avantage de diminuer le nombre global de couches de l'empilement. Elle est de préférence à base d'un mélange entre d'une part de l'oxyde de silicium, et d'autre part au moins un oxyde métallique choisi parmi l'oxyde d'étain, l'oxyde de zinc, l'oxyde de titane. Elle peut aussi être à base d'oxynitrure ou oxycarbure de silicium et/ou à base d'oxynitrure d'aluminium.

Les matériaux les plus appropriés pour constituer la première et/ou la troisième couche, celles à haut indice, sont à base d'oxyde(s) métallique(s) choisi(s) parmi l'oxyde de zinc ZnO, l'oxyde d'étain SnO₂ l'oxyde de zirconium ZrO₂. Il peut notamment s'agir d'un oxyde mixte de Zn et de Sn, du type stannate de zinc. Ils peuvent aussi être à base de nitrure(s) choisi(s) parmi le nitrure de silicium Si₃N₄ et/ou le nitrure d'aluminium AlN.

Utiliser une couche en nitrure pour l'une ou l'autre des couches à haut indice, notamment la troisième au moins, permet d'ajouter une fonctionnalité à l'empilement, à savoir une capacité à mieux supporter les traitements thermiques sans altération notable de ses propriétés optiques. Or, c'est une fonctionnalité qui est importante pour les verres qui doivent faire partie des cellules solaires, car ces verres doivent généralement subir un traitement thermique à haute température, du type trempe, où les verres doivent être chauffés entre 500 et 700°C. Il devient alors avantageux de pouvoir déposer les couches minces avant le traitement thermique sans que cela pose de problème, car il est plus simple sur le plan industriel de faire les dépôts avant tout traitement thermique. On peut ainsi avoir une seule configuration d'empilement antireflet, que le verre porteur soit ou non destiné à subir un traitement thermique.

Même s'il n'est pas destiné à être chauffé, il reste intéressant d'utiliser au moins une couche en nitrure, car elle améliore la durabilité mécanique et chimique de l'empilement dans son ensemble. Cela est d'autant plus important dans des applications à des cellules solaires, constamment exposées aux aléas climatiques.

Selon un mode de réalisation particulier, la première et/ou la troisième couche, celles à haut indice, peuvent en fait être constituées de plusieurs couches à haut indice superposées. Il peut tout particulièrement s'agir d'un bicouche du type SnO₂/Si₃N₄ ou Si₃N₄/SnO₂. L'avantage en est le suivant : le Si₃N₄ tend à se déposer un peu moins facilement, un peu plus lentement qu'un oxyde métallique classique comme SnO₂, ZnO ou ZrO₂ par pulvérisation cathodique réactive. Pour la troisième couche notamment, qui est la plus épaisse et la plus importante pour protéger l'empilement des détériorations éventuelles résultant d'un traitement thermique, il peut être intéressant de dédoubler la couche de façon à mettre juste l'épaisseur suffisante de Si₃N₄ pour obtenir l'effet de protection vis-à-vis des traitements thermiques voulus, et à "compléter" optiquement la couche par du SnO₂, du ZnO ou par un oxyde mixte de zinc et d'étain du type stannate de zinc.

Les matériaux les plus appropriés pour constituer la seconde et/ou la quatrième couche, celles à bas indice, sont à base d'oxyde de silicium, d'oxynitrure et/ou d'oxycarbure de silicium ou encore à base d'un oxyde mixte de silicium et d'aluminium. Un tel oxyde mixte tend à avoir une meilleure durabilité, notamment chimique, que du SiO₂ pur (Un exemple en est donné dans le brevet EP- 791 562). On peut ajuster la proportion respective des deux oxydes pour obtenir l'amélioration de durabilité escomptée sans trop augmenter l'indice de réfraction de la couche.

Le verre choisi pour le substrat revêtu de l'empilement selon l'invention ou pour les autres substrats qui lui sont associés pour former un vitrage, peut être particulier, par exemple extra-clair du type "Diamant" ( pauvre en oxides de fer notamment), ou être un verre clair silico-sodo-calcique standard du type "Planilux" (deux types de verres commercialisés par Saint-Gobain Vitrage).

Des exemples particulièrement intéressants des revêtements selon l'invention comprennent les séquences de couches suivantes :
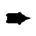 pour un empilement à quatre couches :
   SnO₂ ou Si₃N₄/SiO₂/SnO₂ ou Si₃N₄/SiO₂ ou SiAlO
   (SiAlO correspond ici a un oxyde mixte d'aluminium et de silicium, sans préjuger de leurs quantités respectives dans le matériau)
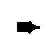 pour un empilement à trois couches :
   SiON/Si₃N₄ ou SnO₂/SiO₂ ou SiAlO
   (même convention pour SiAlO, la formule SiON désignant ici un oxynitrure sans préjuger des quantités respectives d'oxygène et d'azote dans le matériau non plus).

Les substrats de type verre, notamment extra-clair, ayant ce type d'empilement peuvent ainsi atteindre des valeurs de transmission intégrées entre 400 et 1100 nm d'au moins 90 %, notamment pour des épaisseurs comprises entre 2 mm et 8 mm.

L'invention a aussi pour objet les substrats revêtus selon l'invention en tant que substrats extérieurs pour des cellules solaires du type Si ou CIS.

On commercialise généralement ce type de produit sous forme de cellules solaires montées en série et disposées entre deux substrats rigides transparents du type verre. Les cellules sont maintenues entre les substrats par un matériau polymère ( ou plusieurs). Selon un mode de réalisation préféré de l'invnetion qui est décrit dans le brevet EP 0739 042, les cellules solaires peuvent-être placées entre les deux substrats, puis l'espace creux entre les substrats est rempli avec un polymère coulé apte à durcir, tout particulièrement à base de polyuréthane issu de la réaction d'un prépolymère d'isocyanate aliphatique et d'un polyétherpolyol. Le durcissement du polymère peut se faire à chaud (30 à 50°C) et éventuellement en légère surpression, par exemple dans un autoclave. D'autres polymères peuvent être utilisés, comme de l'éthylène vinylacétate EVA, et d'autres montages sont possibles (par exemple, un feuilletage entre les deux verres des cellules à l'aide d'une ou de plusieurs feuilles de polymère thermoplastique).

C'est l'ensemble des substrats, du polymère et des cellules solaires que l'on désigne et que l'on vend sous le nom de « module solaire. »

L'invention a donc aussi pour objet lesdits modules. Avec le substrat modifié selon l'invention, les modules solaires peuvent augmenter leur rendement d'au moins 1, 1.5 ou 2% (exprimé en densité de courant intégré) par rapport à des modules utilisant le même substrat mais dépourvus du revêtement. Quand on sait que les mudules solaires ne sont pas vendus au mètre carré, mais à la puissance électrique délivrée (approximativement, on peut estimer qu'un mètre carré de cellule solaire peut fournir environ 130 Watt), chaque pourcent de rendement supplémentaire accroît la performance électrique, et donc le prix, d'un module solaire de dimensions données.

L'invention a également pour objet le procédé de fabrication des substrats verriers à revêtement antireflet (A) selon l'invention. Un procédé consiste à déposer l'ensemble des couches, successivement, par une technique sous vide, notamment par pulvérisation cathodique assistée par champ magnétique ou par décharge couronne. Ainsi, on peut déposer les couches d'oxyde par pulvérisation réactive du métal en question en présence d'oxygène et les couches en nitrure en présence d'azote. Pour faire du SiO₂ ou du Si₃N₄, on peut partir d'une cible en silicium que l'on dope légèrement avec un métal comme l'aluminium pour la rendre suffisamment conductrice.

Il est également possible, comme le préconise le brevet WO97/43224, qu'une partie des couches de l'empilement soit déposée par une technique de dépôt à chaud du type CVD, le reste de l'empilement étant déposé à froid par pulvérisation cathodique.

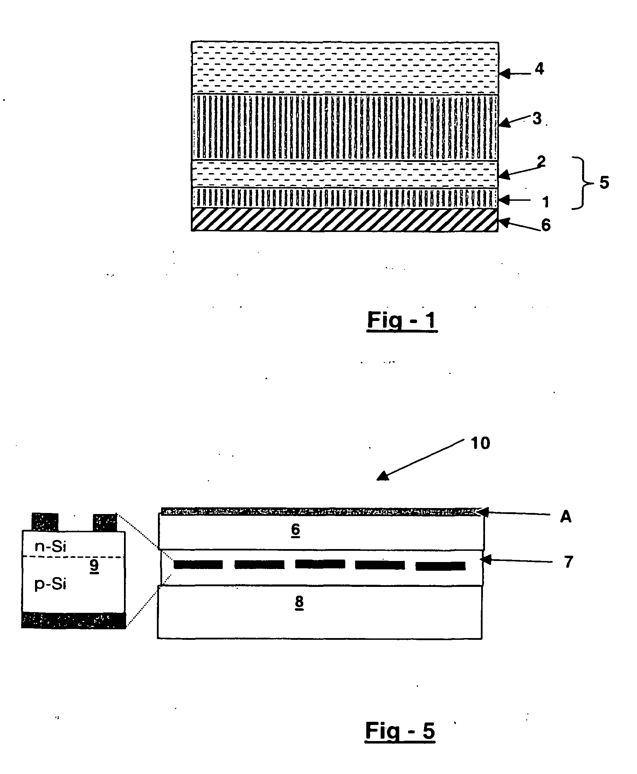

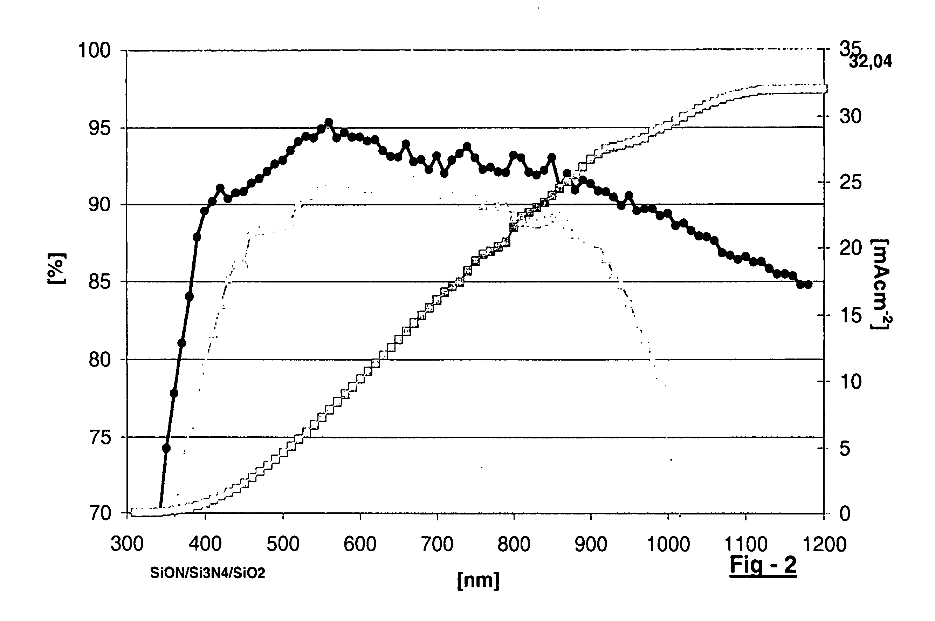

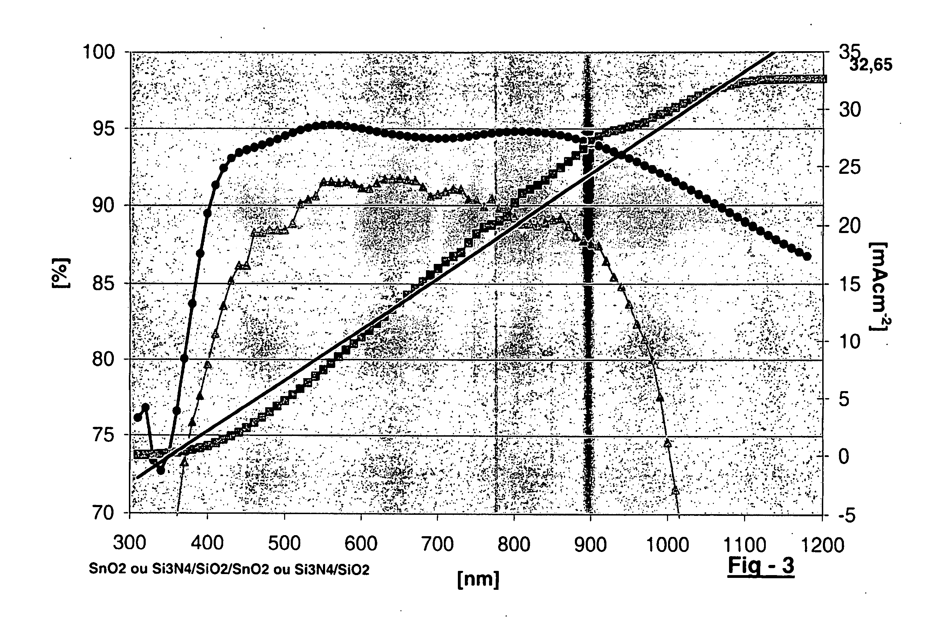

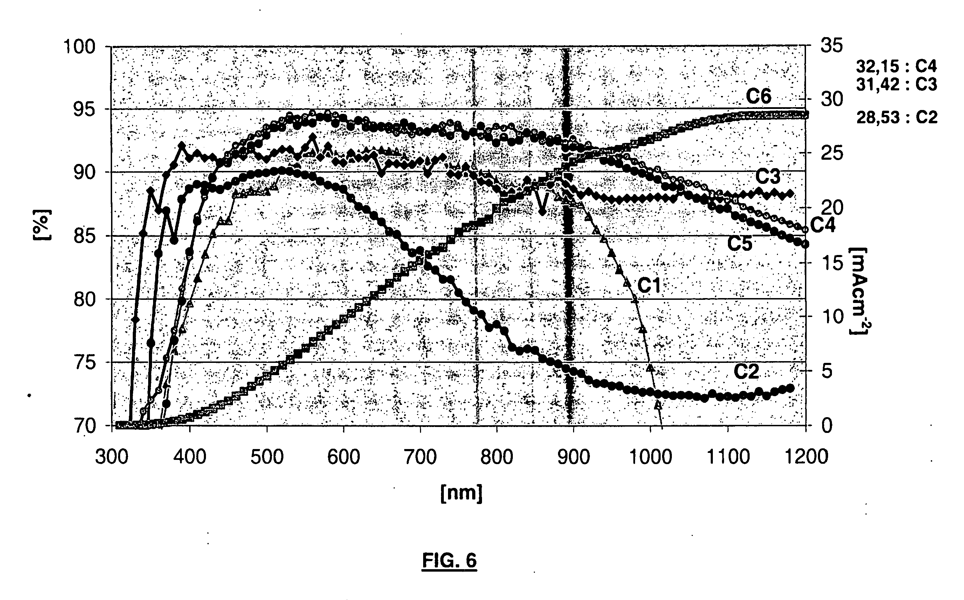

Les détails et caractéristiques avantageuses de l'invention vont maintenant ressortir des exemples suivants non limitatifs, à l'aide des figures :
□ **figure 1** : un substrat muni d'un empilement antireflet A à trois ou quatre couches selon l'invention,
□ **figures 2****,** **3****,** **4****,** **6** : des graphes représentant le spectre en transmission des substrats revêtus selon l'invention et le rendement des cellules solaire les utilisant, par rapport à une cellule de référence.
□ **figure 5** : un module solaire intégrant le substrat selon la figure 1.

La figure 1, très schématique, représente en coupe un verre 6 surmonté d'un empilement antireflet (A) à quatre couches 1, 2, 3, 4 ou à trois couches 5, 3, 4.

### EXEMPLE 1

Cet exemple utilise un substrat 6 en verre extra-clair de 4 mm d'épaisseur, de la gamme DIAMANT précité. Il utilise l'empilement antireflet a trois couches.

L'empilement est le suivant :

| | | **Indice de réfraction** | **Epaisseur (nm)** |
|---|---|---|---|
| SiON | (5) | 1.75 | 76 |
| Si₃N₄ | (3) | 2.05 | 145 |
| SiO₂ | (4) | 1.47 | 105 |

| | | | |
|---|---|---|---|
| (Les épaisseurs indiquées ci-dessus sont les épaisseurs géométriques des couches). | | | |

Le verre muni des trois couches est ensuite trempé.

### EXEMPLE 2

L'exemple 2 concerne un empilement antireflet à quatre couches, et est le résultat de modélisation

Dans cet exemple, l'empilement antireflet utilisé est le suivant :

| | | **Indice de réfraction** | **Exemple 2 (nm)** |
|---|---|---|---|
| SnO₂ | (1) | 1,95 - 2,05 | 19 |
| SiO₂ | (2) | 1,47 | 29 |
| SnO₂ | (3) | 1,95 - 2,05 | 150 |
| SiO₂ | (4) | 1,47 | 100 |

| | | | |
|---|---|---|---|
| (Le SnO₂ peut être remplacé, pour la couche (1) et/ou pour la couche (3), par du Si₃N₄). | | | |

### EXEMPLE 2bis

L'exemple 2 est réalisé de façon expérimentale cette fois, sur un verre extra-clair de 4 mm de la gamme DIAMANT précitée

Les verres revêtus des exemples 1, 2 et 2 bis (par calcul pour l'exemple 2) sont montés en tant que verres extérieurs de modules solaires. La figure 5 représente de façon très schématique un module solaire 10 selon l'invention. Le module 10 est constitué de la façon suivante :le verre 6 muni du revêtement antireflet (A) est associé à un verre 8 dit verre « intérieur ». Ce verre 8 est en verre trempé, de 4 mm d'épaisseur, et de type clair extra-clair (« Planidur DIAMANT »). Les cellules solaires 9 sont placées entre les deux verres, puis on vient couler dans l'entre-verre un polymère durcissable à base de polyuréthane 7 conformément à l'enseignement du brevet EP 0 739 042 pré-cité.

Chaque cellule solaire 9 est constituée, de façon connue, à partir de « wafers » de silicium formant une jonction p/n et des contacts électriques avant et arrière imprimés. Les cellules solaires de silicium peuvent être remplacées par des cellules solaires utilisant d'autres semi-conducteurs (comme CIS, CdTe, a-Si, GaAs, GalnP).

A titre de comparaison, on a monté un module solaire identique au précédent, mais avec un verre extérieur 6 en verre extra-clair ne comportant pas le revêtement antireflet selon l'invention.

La figure 2 représente les résultats de la cellule utilisant l'exemple 1 :
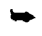 en abscisse sont représentées les longueurs d'onde (λ) en nanomètres,
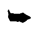 en ordonnées (à droite) est représentée la densité (d) de courant intégrée générée par la cellule, en mAcm-²,
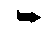 en ordonnées (à gauche) est représentée la transmission (T) en pourcentages.
   ★ La courbe avec les triangles représente la conversion de l'énergie solaire en énergie électrique en fonction de la longueur d'onde (EQE) (que l'on désigne aussi sous le terme anglais « external quantuum efficiency »).
   ★ La courbe avec des ronds représente la transmission T à travers le verre extérieur 6 du module solaire.
   ★ La courbe avec des carrés représente le courant de court-circuit intégré « Air Mass 1.5 » , , en prenant en compte le spectre solaire standard selon la norme ASTM E892-87

La figure 3, avec les mêmes conventions, représente les résultats modélisés avec le module solaire utilisant l'exemple 2.

La figure 6 représente les résultats obtenus avec le module solaire utilisant le revêtement effectivement réalisé selon l'exemple 2 bis :
- La courbe avec des triangles C1 correspond à la EQE explicitée plus haut.
- La courbe C2 correspond à la transmission T à travers le verre extérieur quand il n'est constitué que d'un verre de 4 mm silico-sodo-calcique standard, de la gamme Planilux commercialisée par Saint-Gobain Glass (comparatif).
- La courbe C3 correspond à la transmission T quand le verre extérieur est constitué d'un verre de 4 mm de la gamme DIAMANT(comparatif).
- La courbe C4 correspond à un verre extérieur selon l'exemple 2 bis, le verre une fois muni du revêtement anti-reflets ayant subi avant montage une trempe, puis un test de résistance à l'humidité connu sous le terme anglais de "damp heat", et consistant à laisser le verre revêtu pendant 1000 heures à 85°C dans une enceinte dont l'atmosphère a un taux d'humidité relative contrôlée de 85 % (norme IEC 61215).
- La courbe C5 correspond à un verre extérieur selon l'exemple 2bis à nouveau, mais cette fois le verre revêtu a subi préalablement au montage un test de résistance chimique connu sous le terme de test de brouillard salin neutre ou BSN, selon la norme EN ISO 6988. Ce test consiste à faire subir au verre 20 cycles se décomposant en 8 heures à 40°C et 100% d'humidité relative dans une atmosphère contenant 0,67% en volume de SO₂, puis 16 heures à 23°C +/- °C sous une atmosphère contenant 75% d'humidité relative.
- La courbe C6 ( avec des carrés) représente le courant de court-circuit intégré, avec les mêmes conventions qu'à la figure 2.
Sur l'axe des ordonnées, sont indiquées les trois valeurs de densité de courant intégrées correspondant aux courbes C4, C3 et C2.

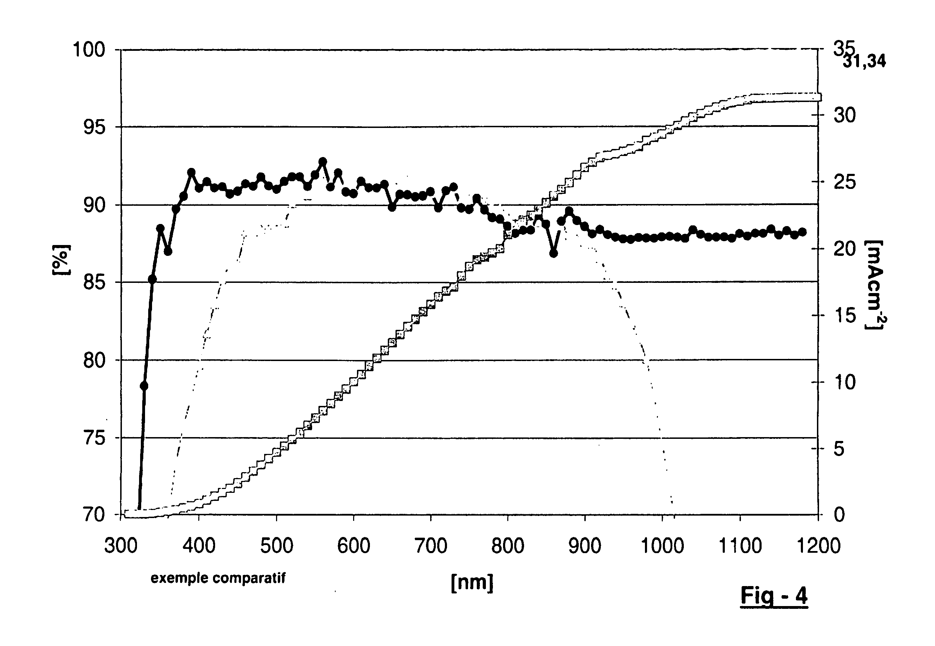

La figure 4, avec les mêmes conventions, représente les résultats obtenus avec la cellule utilisant le verre extra-clair sans revêtement antireflet, à titre de comparaison.

Si on compare les courbes de transmission des figures figures 2 et 4, on voit qu'avec le verre extra-clair sans couches (figure 4), la courbe est plate dans la gamme des 400 à 1100 nm, aux environs de 92%, contrairement à la courbe de transmission de l'exemple 1 (figure 2) .

Ces différences se traduisent par des différences dans les performances des cellules solaires. On passe d'une densité de courant intégré de 31,34 mAcm-² pour l'exemple comparatif (figure 4) à 32,04 mAcm-² pour l'exemple 1 jusqu'à 32,65 mAcm-² pour l'exemple 2.

Comme il s'agit de cellules solaires utilisant du silicium cristallin, les rendements de conversion de l'énergie solaire en énergie électrique sont par contre similaires en fonction de la longueur d'onde pour les trois cellules.

Ces exemples confirment que les revêtements antireflet selon l'invention permettent d'augmenter les performances des cellules solaires sans en compliquer excessivement la fabrication.

Les résultats de l'exemple 1 montrent que le revêtement anti-reflet (A) selon l'invention est apte à subir des traitements thermiques du type trempe.

Les résultats expérimentaux de l'exemple 2 bis confirme les résultats modélisés de l'exemple 2, avec des densités de courant intégrées significativement supérieures qu'avec des verres dépourvus de revêtement anti-reflets. On a pu aussi vérifier que l'on obtient ces bons résultats, même quand le verre revêtu a du subir une trempe et/ou des tests de résistance à l'eau et de résisatnce chimique :on prouve ainsi la stabilité du revêtement selon l'invention.

Les revêtements à quatre couches sont un peu plus performants que les revêtements à trois couches, mais un peu plus longs à fabriquer.

La présente invention est un perfectionnement de l'invention décrite dans le brevet FR-2 800 998, qui concerne des revêtements anti-reflets adaptés pour une optimisation de l'effet anti-reflet à incidence non perpendiculaire dans le visible (notamment visant des applications pour les parebrise de véhicules.. Les revêtements selon la présente invention ont cependant des épaisseurs sélectionnées pour une application particulière aux modules solaires, avec notamment une troisième couche plus épaisse (généralement d'au moins 120 nm et non d'au plus 120 nm).

## Revendications

1. Substrat transparent (6) verrier, comportant sur au moins une de ses faces un revêtement antireflet adapté pour cellules solaire, au moins dans le visible et dans le proche infrarouge tel que ledit substrat a une transmission intégrée sur une gamme de longueurs d'onde comprise entre 400 et 1100 nm d'au moins 90%, ledit revêtement étant fait d'un empilement (A) de couches minces en matériau diélectrique d'indices de réfraction alternativement forts et faibles, ***caractérisé en ce que*** l'empilement comporte successivement :
- une première couche (1), à haut indice, d'indice à réfraction n₁ compris entre 1,85 et 2,15 et d'une épaisseur géométrique e₁ comprise entre 5 et 50 nm,
- une seconde couche (2), à bas indice, d'indice de réfraction n₂ compris entre 1,30 et 1,70 et d'épaisseur géométrique e₂ comprise entre 5 et 50 nm,
- une troisième couche (3), à haut indice, d'indice de réfraction n₃ compris entre 1,85 et 2,15 et d'épaisseur géométrique e₃ comprise entre 130 et 170 nm,
- une quatrième couche (4), à bas indice, d'indice de réfraction n₄ compris entre 1,30 et 1,70 et d'épaisseur géométrique e₄ d'au moins 80 nm,
et en que la première couche à haut indice (1) et la troisième couche à haut indice (3) sont à base d'oxyde(s) métallique(s) choisi(s) parmi l'oxyde de zinc, l'oxyde d'étain ou l'oxyde mixte de zinc et d'étain.

2. Substrat (6) selon la revendication 1, ***caractérisé en ce que*** la première couche à haut indice (1) et/ou la troisième couche à haut indice (3) sont à base d'un oxyde mixte de zinc et d'étain, du type Stannate de Zinc.

3. Substrat (6) selon la revendication 2, ***caractérisé en ce que*** la première couche à haut indice (1) et la troisième couche à haut indice (3) sont à base d'un oxyde mixte de zinc et d'étain, du type Stannate de Zinc.

4. Substrat (6) selon l'une des revendications précédentes, ***caractérisé en ce que*** n₁ et/ou n₃ sont compris entre 1,85 et 2,15, notamment entre 1,90 et 2,10 ou entre 2,0 et 2,1.

5. Substrat (6) selon l'une des revendications précédentes, ***caractérisé en ce que*** n₂ et/ou n₄ sont compris entre 1,35 et 1,55 ou entre 1,40 et 1,50.

6. Substrat (6) selon l'une des revendications précédentes, ***caractérisé en ce que*** e₁ est compris entre 10 et 30 nm, notamment entre 15 et 25 nm.

7. Substrat (6) selon l'une des revendications précédentes, ***caractérisé en ce que*** e₂ est compris entre 15 et 45 nm, notamment entre 20 et 40 nm, de préférence inférieur ou égal à 35 nm.

8. Substrat (6) selon l'une des revendications précédentes, ***caractérisé en ce que*** e₃ est compris entre 140 et 160 nm.

9. Substrat (6) selon l'une des revendications précédentes, ***caractérisé en ce que*** e₄ est supérieur ou égal à 90 nm, et est notamment compris entre 95 et 120 nm.

10. Substrat (6) selon l'une des revendications précédentes, ***caractérisé en ce que*** la seconde couche à bas indice (2) et/ou la quatrième couche à bas indice (4) sont à base d'oxyde de silicium, d'oxynitrure et/ou oxycarbure de silicium ou d'un oxyde mixte de silicium et d'aluminium.

11. Utilisation du substrat (6) selon l'une des revendications précédentes, en tant que substrat extérieur transparent de modules solaires (10) comprenant une pluralité de cellules solaires (9) du type Si ou CIS.

12. Module solaire (10) comprenant une pluralité de cellules solaires (9) du type Si , CIS, CdTe, a-Si, GaAs ou GalnP, ***caractérisé en ce qu'**il* a en tant que substrat extérieur le substrat (6) selon l'une des revendications 1 à 11.

13. Module solaire (10) selon la revendication 12, ***caractérisé en ce qu'**il* a une augmentation de son rendement, exprimée en densité de courant intégrée, d'au moins 1, 1.5 ou 2% par rapport à un module utilisant un substrat extérieur dépourvu de l'empilement antireflet (A).

14. Module solaire (10) selon l'une des revendications 12 ou 13 **caractérisé en ce qu'**il comporte deux substrats en verre (6, 8), les cellules solaires (9) étant disposées dans l'entre-verre dans lequel on a coulé un polymère durcissable (7).

15. Procédé d'obtention du substrat (6) selon l'une des revendications 1 à *10 **caractérisé en ce qu'**on* dépose l'empilement (A) antireflet par pulvérisation cathodique.

## Claims

1. Transparent substrate (6) made of glass, having on at least one of its faces an antireflection coating suitable for solar cells, at least in the visible and in the near infrared such that said substrate has a transmission integrated over a wavelength range between 400 and 1100 nm of at least 90%, said coating being made from a multilayer (A) of thin layers of a dielectric having alternately high and low refractive indexes, ***characterized in that*** the multilayer film comprises, in succession:
- a high-index first layer (1), having a refractive index n₁ of between 1.85 and 2.15 and a geometrical thickness e₁ of between 5 and 50 nm;
- a low-index second layer (2), having a refractive index n₂ of between 1.30 and 1.70 and a geometrical thickness e₂ of between 5 and 50 nm;
- a high-index third layer (3), having a refractive index n₃ of between 1.85 and 2.15 and a geometrical thickness e₃ of between 130 nm and 170nm;
- a low-index fourth layer (4), having a refractive index n₄ of between 1.30 and 1.70 and a geometrical thickness e₄ of at least 80 nm,
and **in that** the high-index first layer (1) and the the high-index third layer (3) are based on one or more metal oxides chosen from zinc oxide, tin oxide or the zinc-tin mixed oxide.

2. Substrate (6) according to claim 1, **characterized in that** the high-index first layer (1) and/or the high-index third layer (3) are based on zinc-tin mixed oxide of the zinc stannate type.

3. Substrate (6) according to claim 1, **characterized in that** the high-index first layer (1) and the high-index third layer (3) are based on zinc-tin mixed oxide of the zinc stannate type.

4. Substrate (6) according to one of the preceding claims, **characterized in that** n₁ and/or n₃ are between 1.85 and 2.15, especially between 1.90 and 2.10 or between 2.0 and 2.1.

5. Substrate (6) according to one of the preceding claims, **characterized in that** n₂ and/or n₄ are between 1.35 and 1.55 or between 1.40 and 1.50.

6. Substrate (6) according to one of the preceding claims, **characterized in that** e₁ is between 10 and 30 nm, especially between 15 and 25 nm.

7. Substrate (6) according to one of the preceding claims, **characterized in that** e₂ is between 15 and 45 nm, especially between 20 and 40 nm, preferably less than or equal to 35 nm.

8. Substrate (6) according to one of the preceding claims, **characterized in that** e₃ is between 140 and 160 nm.

9. Substrate (6) according to one of the preceding claims, **characterized in that** e₄ is greater than or equal to 90 nm and is especially between 95 and 120 nm.

10. Substrate (6) according to one of the preceding claims, **characterized in that** the low-index second layer (2) and/or the low-index fourth layer (4) are based on silicon oxide, silicon oxynitride and/or oxycarbide or on a mixed silicon-aluminium oxide.

11. Use of the substrate (6) according to one of the preceding claims as the external transparent substrate of solar modules (10) comprising a plurality of solar cells (9) of the Si or CIS type.

12. Solar module (10) comprising a plurality of solar cells (9) of the Si, CIS, CdTe, a-Si, GaAs or GalnP type, ***characterized* in that** it has the substrate (6) according to one of Claims 1 to 10 as the external substrate.

13. Solar module (10) according to Claim 12, ***characterized in* that** its efficiency, expressed in terms of integrated current density, is increased by at least 1, 1.5 or 2% over a module using an external substrate not having the multilayer antireflection film (A).

14. Solar module (10) according to either of Claims 12 or 13, **characterized *in* that** it comprises two glass substrates (6, 8), the solar cells (9) being placed in the inter-glass space into which a curable polymer (7) is poured.

15. Process for obtaining the substrate (6) according to one of Claims 1 to 10, **characterized in that** the multilayer antireflection film (A) is deposited by sputtering.

## Patentansprüche

1. Transparentes Glassubstrat (6), umfassend - auf wenigstens einer seiner Seiten
- eine für Solarzellen ausgelegte Antireflex-Beschichtung, wenigstens im sichtbaren und im Nah-Infrarot-Bereich, die derart ist, dass das Substrat eine integrierte Transmission über einen Wellenlängenbereich zwischen 400 und 1100 nm von wenigstens 90 % aufweist, wobei die Beschichtung aus einem Stapel (A) dünner Schichten aus dielektrischem Material mit abwechselnd hohen und niedrigen Brechungsindizes ausgebildet ist, **dadurch gekennzeichnet, dass** der Stapel nacheinander umfasst:
- eine hochbrechende erste Schicht (1) mit einem Brechungsindex n₁ im Bereich zwischen 1,85 und 2,15 und einer geometrischen Dicke e₁ im Bereich zwischen 5 und 50 nm,
- eine niedrigbrechende zweite Schicht (2) mit einem Brechungsindex n₂ im Bereich zwischen 1,30 und 1,70 und einer geometrischen Dicke e₂ im Bereich zwischen 5 und 50 nm,
- eine hochbrechende dritte Schicht (3) mit einem Brechungsindex n₃ im Bereich zwischen 1,85 und 2,15 und einer geometrischen Dicke e₃ im Bereich zwischen 130 und 170 nm,
- eine niedrigbrechende vierte Schicht (4) mit einem Brechungsindex n₄ im Bereich zwischen 1,30 und 1,70 und einer geometrischen Dicke e₄ von wenigstens 80 nm,
und dass die hochbrechende erste Schicht (1) und die hochbrechende dritte Schicht (3) auf der Basis von Metalloxid(en), ausgewählt aus Zinkoxid, Zinnoxid oder Zink-Zinn-Mischoxid sind.

2. Substrat (6) nach Anspruch 1, **dadurch gekennzeichnet, dass** die hochbrechende erste Schicht (1) und/oder die hochbrechende dritte Schicht (3) auf der Basis eines Zink-Zinn-Mischoxids vom Typ Zinkstannat sind.

3. Substrat (6) nach Anspruch 2, **dadurch gekennzeichnet, dass** die hochbrechende erste Schicht (1) und die hochbrechende dritte Schicht (3) auf der Basis eines Zink-Zinn-Mischoxids vom Typ Zinkstannat sind.

4. Substrat (6) nach einem der vorstehenden Ansprüche, **dadurch gekennzeichnet, dass** n₁ und/oder n₃ im Bereich zwischen 1,85 und 2,15, insbesondere zwischen 1,90 und 2,10 oder zwischen 2,0 und 2,1 liegen.

5. Substrat (6) nach einem der vorstehenden Ansprüche, **dadurch gekennzeichnet, dass** n₂ und/oder n₄ im Bereich zwischen 1,35 und 1,55 oder zwischen 1,40 und 1,50 liegen.

6. Substrat (6) nach einem der vorstehenden Ansprüche, **dadurch gekennzeichnet, dass** e₁ im Bereich zwischen 10 und 30 nm, insbesondere zwischen 15 und 25 nm liegt.

7. Substrat (6) nach einem der vorstehenden Ansprüche, **dadurch gekennzeichnet, dass** e₂ im Bereich zwischen 15 und 45 nm, insbesondere zwischen 20 und 40 nm liegt, vorzugsweise kleiner oder gleich 35 nm ist.

8. Substrat (6) nach einem der vorstehenden Ansprüche, **dadurch gekennzeichnet, dass** e₃ im Bereich zwischen 140 und 160 nm liegt.

9. Substrat (6) nach einem der vorstehenden Ansprüche, **dadurch gekennzeichnet, dass** e₄ größer oder gleich 90 nm ist und insbesondere im Bereich zwischen 95 und 120 nm liegt.

10. Substrat (6) nach einem der vorstehenden Ansprüche, **dadurch gekennzeichnet, dass** die niedrigbrechende zweite Schicht (2) und/oder die niedrigbrechende vierte Schicht (4) auf der Basis von Siliziumoxid, von Siliziumoxinitrid und/oderoxicarbid oder eines Silizium-Aluminium-Mischoxids sind,

11. Verwendung des Substrats (6) nach einem der vorstehenden Ansprüche, als transparentes Außensubstrat von Solarmodulen (10), die eine Vielzahl von Solarzellen (9) vom Typ Si oder CIS umfassen.

12. Solarmodul (10), das eine Vielzahl von Solarzellen (9) vom Typ Si, CIS, CdTe, a-Si, GaAs oder GalnP umfasst, **dadurch gekennzeichnet, dass** es als Außensubstrat das Substrat (6) nach einem der Ansprüche 1 bis 11 aufweist.

13. Solarmodul (10) nach Anspruch 12, **dadurch gekennzeichnet, dass** es im Vergleich zu einem Modul, das ein Außensubstrat ohne die Antireflex-Beschichtung (A) verwendet, eine Erhöhung seines Wirkungsgrades, ausgedrückt in integrierter Stromdichte, von wenigstens 1, 1,5 oder 2 % aufweist.

14. Solarmodul (10) nach einem der Ansprüche 12 oder 13, **dadurch gekennzeichnet, dass** es zwei Glassubstrate (6, 8) umfasst, wobei die Solarzellen (9) in dem Glaszwischenraum angeordnet sind, in den ein härtbares Polymer (7) gegossen wurde.

15. Verfahren zum Erhalten des Substrats (6) nach einem der Ansprüche 1 bis 10, **dadurch gekennzeichnet, dass** der Antireflex-Stapel (A) durch Kathodenzerstäubung abgeschieden wird.
